# EUROPÄISCHE PATENTSCHRIFT

(11) **EP 2 949 512 B1**
(45) Veröffentlichungstag und Bekanntmachung des Hinweises auf die Patenterteilung: **12.04.2017**
(21) Anmeldenummer: 14170117.7
(22) Anmeldetag: 27.05.2014
(51) Int. Cl.: B60R 1/06

(54) **Dichteinrichtung, Rückblickvorrichtung sowie Kraftfahrzeug**
Sealing device, rear viewing device and motor vehicle
Dispositif d'étanchéité, dispositif de rétroviseur et véhicule automobile

(43) Veröffentlichungstag der Anmeldung: 02.12.2015
(73) Patentinhaber: SMR Patents S.à.r.l., 1653 Luxembourg (LU)
(72) Erfinder: Hein, Peter, 73770 Denkendorf (DE); Szilágyi, Csaba, 73730 Esslingen (DE)
(74) Vertreter: Weber-Bruls, Dorothée

(56) Entgegenhaltungen:
- JP-A- H0 942 456
- JP-A- S62 134 348
- US-A1- 2008 149 803

## Beschreibung

Die Erfindung betrifft eine Dichteinrichtung für eine Rückblickvorrichtung, wie Innen- oder Außenspiegel oder Kamera, eines Kraftfahrzeugs die zwischen einem Fußteil und einem relativ zum Fußteil von einer Grundstellung in mindestens eine Abklappstellung drehbaren, Kopfteil anordenbar ist, mit mindestens einem Dichtmittel, das am Fußteil oder am Kopfteil festlegbar oder festgelegt ist und das in einer Dichtanordnung, in der es am Fußteil und am Kopfteil anliegend einen zwischen Fußteil und Kopfteil bestehenden Spalt verschließt, anordenbar oder angeordnet ist. Darüber hinaus betrifft die Erfindung eine Rückblickvorrichtung mit einer derartigen Dichteinrichtung sowie ein Kraftfahrzeug mit einer derartigen Rückblickvorrichtung bzw. mit einer derartigen Dichteinrichtung. Dichteinrichtungen für Rückblickvorrichtungen bei Kraftfahrzeugen sind beispielsweise im Gebiet der Außenspiegel bekannt. Bei diesen ist ein Kopfteil bezüglich eines Fußteils relativ bewegbar. Um einem Durchströmen von Luft sowie einem Eindringen von Feuchtigkeit und Schmutz durch einen zwischen Fußteil und Kopfteil nie ganz zu vermeidenden Spalt vorzubeugen ist bei den bekannten Rückblickvorrichtungen eine Dichteinrichtung vorgesehen. Die Dichteinrichtung ist bei den bekannten Rückblickvorrichtungen ringartig und die Rückblickvorrichtung in Gänze umgehend ausgebildet.

Um die Gefahr einer Beschädigung eines Außenspiegels, insbesondere in einer geparkten Position, zu reduzieren ist das Kopfteil des Außenspiegels von einer Grundstellung, in der das Kopfteil ausgeklappt am Fahrzeug angeordnet und der rückwärtige Verkehr beobachtbar ist, in einer Abklappstellung überführbar, in der der Außenspiegel kompakt am Kraftfahrzeug anordenbar ist.

Derartige Außenspiegel mit Dichteinrichtungen sind bekannt aus JP H09 42456 A und JP S62 134348 A. Die JP H09 42456 A offenbart eine Dichteinrichtung gemäß dem Oberbegriff des Anspruchs 1.

Bei den bekannten Dichteinrichtungen hat es sich herausgestellt, dass die Drehebene, innerhalb der das Kopfteil bezüglich des Fußteils von der Grundstellung in die Abklappstellung überführt wird nicht deckungsgleich mit der Ebene der Oberfläche der Dichteinrichtung ist. Hierdurch kann es nie ganz vermieden werden, dass die Dichteinrichtung gestaucht, gestreckt oder dergleichen wird, wodurch die Dichteinrichtung beschädigt werden kann.

Diesem Problem wurde versucht derart entgegen zu treten, dass vor dem Überführen des Kopfteils von der Grundstellung in die Abklappstellung ein Abstand zwischen Kopfteil und Fußteil durch eine entsprechende Kinematik vergrößert wurde und hieran anschließend ein Überführen von der Grundstellung in die Abklappstellung freigegeben war. Dieses erweist sich als konstruktiv umständlich und kostenintensiv.

Eine Aufgabe eines Ausführungsbeispiels der Erfindung ist, eine Dichteinrichtung sowie eine Rückblickvorrichtung vorzuschlagen, bei der die Lebensdauer der Dichteinrichtung erhöht ist.

Diese Aufgabe wird durch eine Dichteinrichtung gemäß Anspruch 1 gelöst.

Die Rückblickvorrichtung kann einen Innen oder einen Außenspiegel umfassen. Ferner kann die Rückblickvorrichtung ein Kamerasystem umfassen, das innerhalb oder außerhalb des Kraftfahrzeugs anordenbar ist.

Die Rückblickvorrichtung kann beispielsweise durch das Fußteil unmittelbar oder mittelbar an einem Kraftfahrzeug angeordnet sein. In dem Kopfteil kann beispielsweise eine Kamera oder eine reflektierende Oberfläche angebracht sein, durch die der Fahrer des Kraftfahrzeugs das rückwärtige Verkehrsgeschehen beobachten kann.

Grundsätzlich ist es denkbar, dass das Dichtmittel durch das Abstandsmittel im Zuge des gesamten Bewegungsprozesses des Kopfteils von der Grundstellung in die Abklappstellung in der Freigabeanordnung angeordnet ist. Allerdings ist es auch denkbar, dass die Dichteinrichtung beim Bewegen des Kopfteils von der Grundstellung in die Abklappstellung alternierend von unterschiedlichen Dichtanordnungen in unterschiedliche Freigabeanordnungen überführbar ist. Hierdurch ist ein stufenweises Verstellen des Kopfteils bezüglich des Fußteils mit gleichzeitigem Wiederherstellen der Dichtwirkung in den einzelnen Stufen realisiert. Ferner kann das Dichtmittel in der Abklappstellung in der Dichtanordnung oder auch in der Abklappstellung in der Freigabeanordnung angeordnet sein Dadurch, dass das Dichtmittel durch das Abstandsmittel beim Bewegen des Kopfteils von der Grundstellung in die Abklappstellung in die Freigabeanordnung überführbar ist, sind die Drehebene des Kopfteils bezüglich des Fußteils und die Ebene der Oberfläche der Dichteinrichtung voneinander getrennt, so dass die Gefahr eines Beschädigen der Dichteinrichtung durch Bewegen des Kopfteils von der Grundstellung in die Abklappstellung und zurück reduziert ist.

Es erweist sich als vorteilhaft, wenn das Überführen des Dichtmittels von der Dichtanordnung in die Freigabeanordnung ein translatorisches Bewegen entlang und/oder quer zur einer Drehachse, um die das Kopfteil beim Bewegen von der Grundstellung in die Abklappstellung drehbar ist, und/oder ein Bewegen zumindest eines in der Dichtanordnung am Kopfteil oder am Fußteil anliegenden und in der Freigabeanordnung berührungsfrei zum Kopfteil oder zum Fußteil angeordneten ersten Dichtabschnitts des Dichtmittels umfasst.

Grundsätzlich ist es denkbar, dass das Dichtmittel in Gänze von der Dichtanordnung in die Freigabeanordnung überführt wird. Allerdings ist es ausreichend, um die Gefahr eines Schneidens der Drehebene mit der Ebene der Oberfläche der Dichteinrichtung zumindest zu reduzieren, wenn zumindest der erste Dichtabschnitt in der Freigabeanordnung berührungsfrei zum Kopfteil bzw. zum Fußteil angeordnet ist.

Das Abstandsmittel kann eine beliebige Formgebung umfassen, mit der das Ziel, das Dichtmittel von der Dichtanordnung in die Freigabeanordnung zu überführen gewährleistbar ist. Dieses lässt sich einfach und kostengünstig gewährleisten, wenn das Abstandsmittel mindestens einen parallel zur Drehachse vom Kopfteil in Richtung Fußteil oder umgekehrt erstreckten Vorsprung umfasst, der zumindest einen schräg zur Drehachse verlaufenden Verdrängungsabschnitt umfasst, der beim Überführen des Kopfteils von der Grundstellung in die Abklappstellung zumindest phasenweise an einem zumindest bereichsweise komplementär zum Verdrängungsabschnitt ausgebildeten Gleitabschnitt des Dichtmittels bewegbar ist.

Solchenfalls umfasst der vom Kopfteil in Richtung Fußteil oder umgekehrt erstreckte Vorsprung eine keil- oder kulissenartige Kontur.

In Weiterbildung letztgenannter Ausführungsform erweist es sich als vorteilhaft, wenn der Gleitabschnitt ein wellen- oder sägezahnartiges Profil umfasst. Solchenfalls kann das Abstandsmittel derart über den Gleitabschnitt der Dichteinrichtung entlang gleiten, dass das Dichtmittel der Dichteinrichtung in einer Vielzahl an Dichtanordnung und Freigabeanordnungen anordenbar ist. Wenn das Abstandsmittel beispielsweise in einer Talsohle des wellen- oder sägezahnartigen Profils des Gleitabschnitts angeordnet ist, befindet sich die Dichteinrichtung in der Dichtanordnung. Wenn das Abstandsmittel an einer Gipfelposition an einen wellen- oder sägezahnartigen Profil des Gleitabschnitts angeordnet ist, befindet sich die Dichteinrichtung in einer Freigabeanordnung.

Durch die Ausgestaltung des Gleitabschnitts durch ein wellen- oder sägezahnartiges Profil, lässt sich die Rückblickvorrichtung in einer Vielzahl an unterschiedlichen Zwischenstellungen, zwischen Grundstellung und Abklappstellung, festlegen und gleichzeitig eine Dichtwirkung durch die Dichteinrichtung gewährleisten.

Es ist denkbar, dass die Dichteinrichtung nach dem Überführen von der Dichtanordnung in die Freigabeanordnung durch das Abstandsmittel in der Freigabeanordnung verbleibt. Um ein automatisches Herstellen der Dichtwirkung zu garantieren, erweist es sich als vorteilhaft, wenn die Dichteinrichtung mindestens ein Spannelement umfasst, durch das das mindestens eine Dichtmittel in die Dichtanordnung vorspannbar oder vorgespannt ist.

Um den zwischen Kopfteil und Fußteil gebildeten Spalt in Gänze zu verschließen ist bei einem Ausführungsbeispiel der Dichteinrichtung vorgesehen, dass das Dichtmittel mindestens einen zumindest in der Dichtanordnung am Fußteil oder am Kopfteil anliegenden zweiten Dichtabschnitt umfasst, der insbesondere in Richtung der Drehachse gegenüber dem Fußteil abgestützt ist und/oder das Spannelement umfasst.

Wenn das Dichtmittel mit dem zweiten Dichtabschnitt in Richtung der Drehachse gegenüber dem Fußteil abgestützt ist, kann das Dichtmittel durch den zweiten Dichtabschnitt das Spannelement ausbilden. Hierdurch bilden Spannelement und Dichtmittel ein gemeinsames Bauteil.

Das Dichtmittel kann den ersten Dichtabschnitt, den zweiten Dichtabschnitt und den Gleitabschnitt in einem gemeinsamen Bauteil umfassen, beispielsweise einem Spritzgussteil. Wenn das Dichtmittel ein Spritzgussteil umfasst, können der erste Dichtabschnitt, der zweite Dichtabschnitt und der Gleitabschnitt im Zuge eines 1-Komponenten Spritzgussverfahrens oder eines Mehr-Komponenten Spritzgussverfahrens gebildet sein. Letzteren falls können der erste Dichtabschnitt und der zweite Dichtabschnitt eine Kunststoff-Weichkomponente und der Gleitabschnitt eine Kunststoff-Hartkomponente umfassen.

Darüber hinaus ist es denkbar, dass das Dichtmittel aus einer Mehrzahl von separaten oder separierbaren Komponenten gebildet ist. Solchenfalls kann der Gleitabschnitt beispielsweise einen Hartkunststoff, ein Metall, eine Keramik oder dergleichen umfassen und insbesondere ring- oder teilringartig ausgebildet sein.

Um ein Rückführen des Dichtmittels von der Freigabeanordnung in die Dichtanordnung zu gewährleisten, erweist es sich als vorteilhaft, wenn das Spannelement mindestens ein zusätzliches Federmittel umfasst, insbesondere eine Ringfeder.

Das Dichtmittel kann grundsätzlich eine beliebige Kontur und Formgebung umfassen, solang die technische Aufgabe, eine Dichtung gegenüber Luftströmungen, Feuchtigkeit und Schmutz des Spaltes zwischen Kopfteil und Fußteil abzudichten, erfüllt ist. Hierbei erweist es sich als vorteilhaft, wenn das Dichtmittel ringartig, insbesondere zumindest nahezu vollumfänglich, um die Drehachse erstreckt ist.

Der erste Dichtabschnitt, der zweite Dichtabschnitt und der Gleitabschnitt können grundsätzlich durch einzelne voneinander separat oder separierbare Bauteile gebildet sein. Die Dichteinrichtung lässt sich einfach und kostengünstig herstellen, wenn der erste Dichtabschnitt, der zweite Dichtabschnitt und der Gleitabschnitt ein gemeinsames Bauteil umfassen, wobei der Gleitabschnitt bezüglich des zweiten Dichtabschnitts in Richtung Drehachse und quer zu Drehachse erstreckt angeordnet ist und/oder wenn der erste Dichtabschnitt und der zweite Dichtabschnitt parallel zur Drehachse erstreckt angeordnet sind.

Das Kopfteil bzw. das Fußteil der Rückblickvorrichtung kann so gebildet sein, dass die Dichteinrichtung mit dem ersten Dichtabschnitt und dem zweiten Dichtabschnitt von innen anliegt. Darüber hinaus ist es denkbar, dass das Fußteil und/oder das Kopfteil eine nutartige Aufnahme umfassen, in der dass Dichtmittel anordenbar ist, wodurch die Dichtwirkung erhöht ist. Solchenfalls erweist sie sich als vorteilhaft, wenn der erste Dichtabschnitt quer zur Drehachse betrachtet eine Dicke umfasst, die korrespondierend, insbesondere komplementär, zu einer nutartigen Aufnahme im Kopfteil oder Fußteil ausgebildet ist.

Darüber hinaus wird die Aufgabe gelöst durch eine Rückblickvorrichtung, wie Innen- oder Außenspiegel oder Kamera, eines Kraftfahrzeugs mit mindestens einem Fußteil, mit mindestens einem Kopfteil, das relativ zum Fußteil von einer Grundstellung in mindestens eine Abklappstellung bewegbar, insbesondere drehbar, ist, und mit mindestens einer zwischen Kopteil und Fußteil anordenbaren Dichteinrichtung, die mindestens ein Dichtmittel umfasst, das am Fußteil oder am Kopfteil festlegbar oder festgelegt ist und das in einer Dichtanordnung, in der es am Fußteil und am Kopfteil anliegend einen zwischen Fußteil und Kopfteil bestehenden Spalt verschließt, anordenbar oder angeordnet ist. Bei dieser ist vorgehsehen, dass die Dichteinrichtung mindestens ein Abstandsmittel umfasst, durch das das Dichtmittel, zumindest beim Bewegen des Kopfteils von der Grundstellung in die Abklappstellung, wenigstens phasenweise von der Dichtanordnung in eine Freigabeanordnung überführbar ist, in der es berührungsfrei bezüglich des Kopfteils und/oder des Fußteils angeordnet ist.

Bei einem Ausführungsbeispiel der Rückblickvorrichtung erweist es sich als vorteilhaft, wenn die Rückblickvorrichtung mindestens eine nutartige Aufnahme für einen ersten Dichtabschnitt des Dichtmittels im Kopfteil und/oder im Fußteil umfasst, wobei die nutartige Aufnahme korrespondierend, insbesondere komplementär zum ersten Dichtabschnitt ausgebildet ist.

Grundsätzlich ist es denkbar, dass das Abstandsmittel ein separates oder separierbares Bauteil umfasst. Die Rückblickvorrichtung lässt sich kompakt ausbilden, wenn das Abstandmittel ein gemeinsames Bauteil mit einem Blendenabschnitt des Kopfteils oder des Fußteils umfasst oder dass das Abstandmittel an einem Blendenabschnitt des Kopfteils oder des Fußteils festgelegt, insbesondere angespritzt, ist.

Das System aus Fußteil und Kopfteil lässt sich kompakt ausbilden, wenn ein Abstand zwischen Fußteil und Kopfteil in der Grundstellung, in der Abklappstellung, und beim Überführen von der Grundstellung in die Abklappstellung im wesentlichen gleich ist.

Schließlich wird die Aufgabe gelöst durch ein Kraftfahrzeug und mindestens einer Rückblickvorrichtung, insbesondere mit mindestens einem der zuvor genannten Merkmale, und mit mindestens einer Dichteinrichtung, insbesondere mit mindestens einem der zuvor genannten Merkmale.

Die Dichteinrichtung, die Rückblickvorrichtung sowie das Kraftfahrzeug erweisen sich in mehrfacher Hinsicht als vorteilhaft:
Dadurch, dass ein Abstandsmittel vorgesehen ist, durch das das Dichtmittel zumindest beim Bewegen des Kopfteils von der Grundstellung in die Abklappstellung, wenigstens Phasenweise von der Dichtanordnung in die Freigabeanordnung überführbar ist, ist eine Entkopplung der Drehebene des Kopfteils bezüglich des Fußteils und der Ebene der Oberfläche des Dichtmittels voneinander getrennt, wodurch die Gefahr einer Beschädigung der Oberfläche beim Überführen des Kopfteils bezüglich des Fußteils von der Grundstellung in die Abklappstellung reduziert ist.

Dadurch, dass das Abstandsmittel einen vom Kopfteil in Richtung Fußteil oder umgekehrt erstreckten Vorsprung umfasst, der, bei einer Ausführungsform gemeinsames Bauteil des Fußteils bzw. des Kopfteils umfasst, kann das Abstandsmittel auf kostengünstige und einfache Art ausgebildet sein.

Weitere Merkmale, Einzelheiten sowie Vorteile entnehmen sich aus den beigefügten Patentansprüchen, aus den zeichnerischen Darstellungen und nachfolgender Beschreibung einer bevorzugten Ausführungsform der Dichteinrichtung.

In der Zeichnung zeigt:
- Figur 1: eine schematische Schnittansicht durch ein erstes Ausführungsbeispiel der Rückblickvorrichtung;
- Figur 2: eine schematische Draufsicht auf ein Dichtmittel der Rückblickvorrichtung gemäß Figur 1;
- Figur 3a: eine schematische Seitenansicht auf ein erstes Ausführungsbeispiel des Abstandsmittel;
- Figur 3b: eine schematische Seitenansicht auf ein zweites Ausführungsbeispiel des Abstandsmittel.

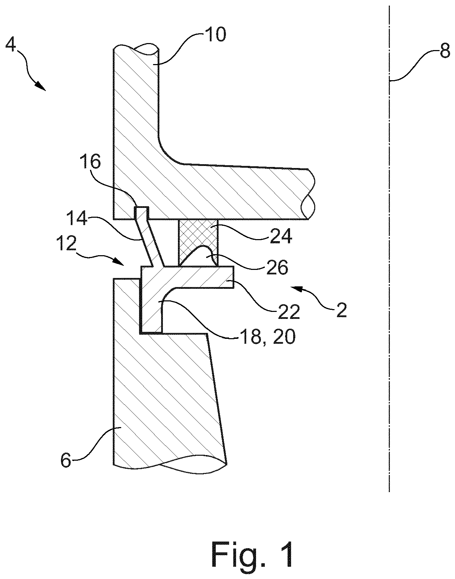

Figur 1 zeigt eine insgesamt mit dem Bezugszeichen 2 versehene Dichteinrichtung für eine Rückblickvorrichtung 4. Die Rückblickvorrichtung 4 umfasst einen Außenspiegel eines Kraftfahrzeugs (in den Figuren nur teilweise und schematisch dargestellt. Die Rückblickvorrichtung 4 umfasst ein Fußteil 6 und ein relativ zum Fußteil 6 von einer Grundstellung in mindestens eine Abklappstellung bewegbares, insbesondere um eine Drehachse 8 drehbares, Kopfteil 10. Zwischen dem Kopfteil 10 und dem Fußteil 6 ist ein Dichtmittel 12 angeordnet, dass bei den in Figuren gezeigten Ausführungsbeispiel am Fußteil 6 festgelegt ist.

Das Dichtmittel 12 umfasst einen ersten Dichtabschnitt 14, der in einer Dichtanordnung in einer nutartigen Aufnahme 16 des Kopfteils 10 angeordnet ist. Darüber hinaus umfasst das Dichtmittel 12 einen zweiten Dichtabschnitt 18, der in Richtung der Drehachse 8 gegenüber dem Fußteil 6 abgestützt und festgelegt ist. Bei den in Figuren gezeigten Ausführungsbeispiel umfasst der zweite Dichtabschnitt 18 gleichzeitig ein Spannelement 20, mit dem das Dichtmittel 12 in die Dichtstellung vorgespannt ist. Schließlich umfasst das Dichtmittel 12 einen Gleitabschnitt 22 an dem ein Abstandsmittel 24 mit einem schräg zur Drehachse 8 verlaufenden Verdrängungsabschnitt 26 entlang gleitbar ist.

Im folgenden wird kurz die Wirkungsweise der Dichteinrichtung skizziert:
Wenn der Kopfteil 10 bezüglich des Fußteils 6 von einer Grundstellung in eine Abklappstellung durch drehen um die Drehachse 8 überführt wird, gleitet das Abstandsmittel 24 mit seinem Verdrängungsabschnitt 26 an dem Gleitabschnitt 22 des Dichtmittels 12 entlang. Der Gleitabschnitt 22 wird durch den Verdrängungsabschnitt 26 in Richtung der Drehachse 8 - in der Bildebene nach unten - verdrängt, wodurch der erste Dichtabschnitt 14 des Dichtmittels 12 außer Eingriff mit der nutartigen Aufnahme 16 des Kopfteils 10 gelangt und berührungsfrei bezüglich des Kopfteils 10 angeordnet ist. Hierdurch ist gewährleistet, dass die Drehebene des Kopfteils 10 und die Ebene der Oberfläche der Dichteinrichtung berührungsfrei zueinander angeordnet sind, wenn das Kopfteil 10 bezüglich des Fußteils 6 verdreht wird, wodurch die Gefahr einer Beschädigung der Dichteinrichtung 2 reduziert ist.

Beim Zurückführen des Kopfteils 10 von der Abklappstellung in die Grundstellung gelangt das Abstandsmittel 24 wieder außer Eingriff mit dem Gleitabschnitt 22 des Dichtmittels 12, wodurch das Dichtmittel 12 durch das Spannelement 20 automatisch in die Dichtanordnung zurückgeführt wird.

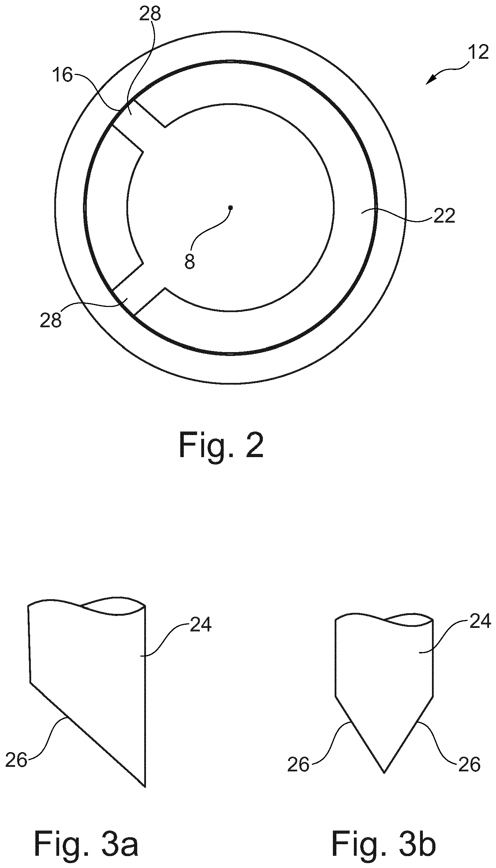

Figur 2 scheint eine schematische Draufsicht auf ein Dichtmittel 12 der Dichteinrichtung 2. In Figur 2 wird ersichtlich, dass der Gleitabschnitt 22 zwei Dichtanordnungsbereiche 28 umfasst, in denen das Abstandsmittel 24 außer Eingriff mit dem Gleitabschnitt 22 des Dichtmittels 12 ist, und in der das Dichtmittel 12 automatisch in die Dichtanordnung überführt wird. Die Lage der beiden Dichtanordnungsbereiche 28 entsprechen hierbei der Grundstellung und der Abklappstellung des Kopfteils 10.

Figur 3a zeigt eine Detailansicht eines Abstandsmittels 24, bei der auf einer Seite ein Verdrängungsabschnitt 26 ausgebildet ist.

Figur 3b zeigt ein zweites Ausführungsbeispiel des Abstandsmittels 24, der zwei Verdrängungsabschnitte 26 umfasst, die aufeinander zulaufen und einander abwechselnd angeordnet sind. Hierdurch ist das Abstandsmittel für unterschiedliche Drehsinne einsetzbar.

Die in der vorstehenden Beschreibung, in den Ansprüchen, sowie in den Zeichnungen gezeigten Merkmale der Erfindung können sowohl einzeln, als auch in jeder beliebigen Kombination in der Verwirklichung der Erfindung mit ihren verschiedenen Ausführungsformen im wesentlich sein.

## Patentansprüche

1. Dichteinrichtung (2) für eine Rückblickvorrichtung (4), wie Innen- oder Außenspiegel oder Kamera, eines Kraftfahrzeugs die zwischen einem Fußteil (6) und einem relativ zum Fußteil (6) von einer Grundstellung in mindestens eine Abklappstellung drehbaren, Kopfteil (10) anordenbar ist, mit mindestens einem Dichtmittel (12), das am Fußteil (6) oder am Kopfteil (10) festlegbar oder festgelegt ist und das in einer Dichtanordnung, in der es am Fußteil (6) und am Kopfteil (10) anliegend einen zwischen Fußteil (6) und Kopfteil (10) bestehenden Spalt verschließt, anordenbar oder angeordnet ist, **gekennzeichnet durch**
mindestens ein Abstandsmittel (24), **durch** das das Dichtmittel (12), zumindest beim Bewegen des Kopfteils (10) von der Grundstellung in die Abklappstellung, wenigstens phasenweise von der Dichtanordnung in eine Freigabeanordnung überführbar ist, in der es berührungsfrei bezüglich des Kopfteils (10) und/oder des Fußteils (6) angeordnet ist.

2. Dichteinrichtung (2) nach Anspruch 1, **dadurch gekennzeichnet, dass** das Überführen des Dichtmittels (12) von der Dichtanordnung in die Freigabeanordnung ein translatorisches Bewegen entlang und/oder quer zur einer Drehachse (8), um die das Kopfteil (10) beim Bewegen von der Grundstellung in die Abklappstellung drehbar ist, und/oder ein Bewegen zumindest eines in der Dichtanordnung am Kopfteil (10) oder am Fußteil (6) anliegenden und in der Freigabeanordnung berührungsfrei zum Kopfteil (10) oder zum Fußteil (6) angeordneten ersten Dichtabschnitts (14) des Dichtmittels (12) umfasst.

3. Dichteinrichtung (2) nach Anspruch 1 oder 2, **dadurch gekennzeichnet, dass** das Abstandsmittel (24) mindestens einen parallel zur Drehachse (8) vom Kopfteil (10) in Richtung Fußteil (6) oder umgekehrt erstreckten Vorsprung umfasst, der zumindest einen schräg zur Drehachse (8) verlaufenden Verdrängungsabschnitt (26) umfasst, der beim Überführen des Kopfteils (10) von der Grundstellung in die Abklappstellung zumindest phasenweise an einem zumindest bereichsweise komplementär zum Verdrängungsabschnitt (26) ausgebildeten Gleitabschnitt (22) des Dichtmittels (12) bewegbar ist.

4. Dichteinrichtung (2) nach Anspruch 3, **dadurch gekennzeichnet, dass** der Gleitabschnitt(22) ein wellen- oder sägezahnartiges Profil umfasst.

5. Dichteinrichtung (2) nach mindestens einem der vorhergehenden Ansprüche, **gekennzeichnet durch**
mindestens ein Spannelement (20), **durch** das das mindestens eine Dichtmittel (12) in die Dichtanordnung vorspannbar oder vorgespannt ist.

6. Dichteinrichtung (2) nach Anspruch 5, **dadurch gekennzeichnet, dass** das Dichtmittel (12) mindestens einen zumindest in der Dichtanordnung am Fußteil (6) oder am Kopfteil (10) anliegenden zweiten Dichtabschnitt (18) umfasst, der in Richtung der Drehachse (8) gegenüber dem Fußteil (6) abgestützt ist und/oder das Spannelement (20) umfasst.

7. Dichteinrichtung (2) nach mindestens einem der Ansprüche 5 oder 6, **dadurch gekennzeichnet, dass**
das Spannelement (20) mindestens ein zusätzliches Federmittel umfasst, insbesondere eine Ringfeder.

8. Dichteinrichtung (2) nach mindestens einem der vorhergehenden Ansprüche, **dadurch gekennzeichnet, dass**
das Dichtmittel (12) ringartig, insbesondere zumindest nahezu vollumfänglich, um die Drehachse (8) erstreckt ist.

9. Dichteinrichtung (2) nach mindestens einem der vorhergehenden Ansprüche, **dadurch gekennzeichnet, dass**
der erste Dichtabschnitt (14), der zweite Dichtabschnitt (18) und der Gleitabschnitt (22) ein gemeinsames Bauteil umfassen, wobei der Gleitabschnitt (22) bezüglich des zweiten Dichtabschnitts (18) in Richtung Drehachse (8) und quer zu Drehachse (8) erstreckt angeordnet ist und/oder wobei der erste Dichtabschnitt (14) und der zweite Dichtabschnitt (18) parallel zur Drehachse (8) erstreckt angeordnet sind.

10. Dichteinrichtung (2) nach mindestens einem der vorhergehenden Ansprüche, **dadurch gekennzeichnet, dass**
der erste Dichtabschnitt (14) quer zur Drehachse (8) betrachtet eine Dicke umfasst, die korrespondierend, insbesondere komplementär, zu einer nutartigen Aufnahme (16) im Kopfteil (10) oder Fußteil (6) ausgebildet ist.

11. Rückblickvorrichtung (4), wie Innen- oder Außenspiegel oder Kamera, eines Kraftfahrzeugs mit mindestens einem Fußteil (6), mit mindestens einem Kopfteil (10), das relativ zum Fußteil (6) von einer Grundstellung in mindestens eine Abklappstellung drehbar, ist, und mit mindestens einer zwischen Kopfteil (10) und Fußteil (6) anordenbaren Dichteinrichtung (2) nach einem der Ansprüche 1 bis 10, die mindestens ein Dichtmittel (12) umfasst, das am Fußteil (6) oder am Kopfteil (10) festlegbar oder festgelegt ist und das in einer Dichtanordnung, in der es am Fußteil (6) und am Kopfteil (10) anliegend einen zwischen Fußteil (6) und Kopfteil (10) bestehenden Spalt verschließt, anordenbar oder angeordnet ist, **dadurch gekennzeichnet dass** die Dichteinrichtung (2) mindestens ein Abstandsmittel (24) umfasst, durch das das Dichtmittel (12), zumindest beim Bewegen des Kopfteils (10) von der Grundstellung in die Abklappstellung, wenigstens phasenweise von der Dichtanordnung in eine Freigabeanordnung überführbar ist, in der es berührungsfrei bezüglich des Kopfteils (10) und/oder des Fußteils (6) angeordnet ist.

12. Rückblickvorrichtung (4) nach Anspruch 11, **gekennzeichnet durch** mindestens eine nutartige Aufnahme (16) für einen ersten Dichtabschnitt (14) des Dichtmittels (12) im Kopfteil (10) und/oder im Fußteil (6), wobei die nutartige Aufnahme (16) korrespondierend, insbesondere komplementär zum ersten Dichtabschnitt (14) ausgebildet ist.

13. Rückblickvorrichtung (4) nach einem der Ansprüche 11 oder 12, **dadurch gekennzeichnet, dass**
das Abstandmittel (24) ein gemeinsames Bauteil mit einem Blendenabschnitt des Kopfteils (10) oder des Fußteils (6) umfasst oder dass das Abstandmittel (24) an einem Blendenabschnitt des Kopfteils (10) oder des Fußteils (6) festgelegt, insbesondere angespritzt, ist.

14. Rückblickvorrichtung (4) nach einem der Ansprüche 11 bis 13, **dadurch gekennzeichnet, dass**
ein Abstand zwischen Fußteil (6) und Kopfteil (10) in der Grundstellung, in der Abklappstellung, und beim Überführen von der Grundstellung in die Abklappstellung im Wesentlichen gleich ist.

15. Kraftfahrzeug mit mindestens einer Rückblickvorrichtung (4) nach einem der Ansprüche 11 bis 14 und mit mindestens einer Dichteinrichtung (2) nach einem der Ansprüche 1 bis 10.

## Claims

1. A sealing device (2) for a rear viewing device (4), such as an interior or exterior mirror or a camera, of a motor vehicle that can be arranged between a foot part (6) and a head part (10) rotatable from a normal position to at least one swung-down position relative to the foot part (6), having at least one sealing means (12) that is fixable or is fixed on the foot part (6) or on the head part (10) and that can be arranged or is arranged in a sealing arrangement, in which it seals, resting on the foot part (6) and on the head part (10), a gap existing between the foot part (6) and the head part (10),
**characterized by**
at least one spacing means (24), by means of which the sealing means (12) is transferable, at least when moving the head part (10) from the normal position to the swung-down position, at least at times from the sealing arrangement to an unblocking arrangement, in which it is arranged such that it does not come into contact with the head part (10) and/or the foot part (6).

2. The sealing device (2) according to Claim 1, **characterized in that** the transfer of the sealing means (12) from the sealing arrangement to the unblocking arrangement comprises a translatory moving along and/or across an axis of rotation (8), about which the head part (10) is rotatable when moving from the normal position to the swung-down position, and/or a moving of at least a first sealing portion (14) of the sealing means (12), said first sealing portion resting on the head part (10) or on the foot part (6) in the sealing arrangement and being arranged, in the unblocking arrangement, such that it does not come into contact with the head part (10) or the foot part (6).

3. The sealing device (2) according to Claim 1 or 2, **characterized in that** the spacing means (24) comprises at least one projection extending parallel to the axis of rotation (8) from the head part (10) toward the foot part (6) or vice versa, said projection comprising at least one displacement portion (26) extending obliquely with respect to the axis of rotation (8), said displacement portion (26) being movable at a sliding portion (22) of the sealing means (12) at least at times when transferring the head part (10) from the normal position to the swung-down position, said sliding portion being formed complementarily with respect to the displacement portion (26) at least in certain areas.

4. The sealing device (2) according to Claim 3, **characterized in that** the sliding portion (22) comprises a wave-like or sawtooth-like profile.

5. The sealing device (2) according to at least one of the preceding claims, **characterized by** at least one tensioning element (20), by means of which the at least one sealing means (12) is prestressable or is prestressed into the sealing arrangement.

6. The sealing device (2) according to Claim 5, **characterized in that** the sealing means (12) comprises at least a second sealing portion (18) resting at least on the sealing arrangement of the foot part (6) or of the head part (10), said second sealing portion (18) being supported in the direction of the axis of rotation (8) with respect to the foot part (6) and/or comprising the tensioning element (20).

7. The sealing device (2) according to at least one of Claims 5 or 6, **characterized in that** the tensioning element (20) comprises at least one additional spring means, particularly an annular spring.

8. The sealing device (2) according to at least one of the preceding claims, **characterized in that**
the sealing means (12) extends around the axis of rotation (8) annularly, in particular at least almost completely circumferentially.

9. The sealing device (2) according to at least one of the preceding claims, **characterized in that**
the first sealing portion (14), the second sealing portion (18) and the sliding portion (22) comprise a common component, wherein the sliding portion (22) is arranged such that it extends, with respect to the second sealing portion (18), in the direction of the axis of rotation (8) and across the axis of rotation (8) and/or wherein the first sealing portion (14) and the second sealing portion (18) are arranged such that they extend parallel to the axis of rotation (8).

10. The sealing device (2) according to at least one of the preceding claims, **characterized in that**
the first sealing portion (14) comprises, when viewed in a direction running across the direction of the axis of rotation (8), a thickness that is formed such that it corresponds to, particularly is complementary with, a groove-like seat (16) in the head part (10) or foot part (6).

11. A rear viewing device (4), such as an interior or exterior mirror or a camera, of a motor vehicle having at least one foot part (6), having at least one head part (10) rotatable, with respect to the foot part (6), from a normal position to at least one swung-down position, and having at least one sealing device (2) according to any one of Claims 1 to 10 that can be arranged between the head part (10) and the foot part (6), said sealing device comprising at least one sealing means (12) that is fixable or is fixed on the foot part (6) or on the head part (10) and that can be arranged or is arranged in a sealing arrangement, in which it seals, resting on the foot part (6) and on the head part (10), a gap existing between the foot part (6) and the head part (10), **characterized in that** the sealing device (2) comprises at least one spacing means (24), by means of which the sealing means (12) is transferable, at least when moving the head part (10) from the normal position to the swung-down position, at least at times from the sealing arrangement to an unblocking arrangement, in which it is arranged such that it does not come into contact with the head part (10) and/or the foot part (6).

12. The rear viewing device (4) according to Claim 11, **characterized by**
at least one groove-like seat (16) for a first sealing portion (14) of the sealing means (12) in the head part (10) and/or in the foot part (6), wherein the groove-like seat (16) is formed such that it corresponds to, particularly is complementary with, the first sealing portion (14).

13. The rear viewing device (4) according to any one of Claims 11 or 12, **characterized in that**
the spacing means (24) comprises a common component with a faceplate portion of the head part (10) or of the foot part (6) or that the spacing means (24) is fixed, particularly injection-moulded, on a faceplate portion of the head part (10) or of the foot part (6).

14. The rear viewing device (4) according to any one of Claims 11 to 13, **characterized in that** a distance between the foot part (6) and the head part (10) is essentially the same in the normal position, in the swung-down position and during the transfer from the normal position to the swung-down position.

15. A motor vehicle having at least one rear viewing device (4) according to any one of Claims 11 to 14 and having at least one sealing device (2) according to any one of Claims 1 to 10.

## Revendications

1. Dispositif d'étanchéité (2) pour un dispositif de rétroviseur (4), comme un rétroviseur intérieur ou un rétroviseur extérieur ou une caméra, d'un véhicule automobile, qui peut être disposé entre une embase (6) et une partie supérieure (10), la partie supérieure (10) pouvant tourner par rapport à l'embase (6) pour passer d'une position initiale à au moins une position abaissée, le dispositif d'étanchéité (2) comprenant au moins un moyen d'étanchéité (12), qui est fixable ou fixé soit sur l'embase (6) soit sur la partie supérieure (10) et qui est disposable ou disposé dans un système d'étanchéité, au sein duquel il est placé contre l'embase (6) et la partie supérieure (10) et ferme un espace vide situé entre l'embase (6) et la partie supérieure (10),
**caractérisé par**
au moins un moyen d'espacement (24), à travers lequel le moyen d'étanchéité (12), tout du moins lors du passage de la partie supérieure (10) d'une position initiale à une position abaissée, peut être amené, tout du moins temporairement, à partir du système d'étanchéité à une position de déblocage dans laquelle il peut être disposé sans contact physique par rapport à la partie supérieure (10) et/ou l'embase (6).

2. Dispositif d'étanchéité (2) selon la revendication 1, **caractérisé en ce que**
le passage du moyen d'étanchéité (12) du système d'étanchéité à une position de déblocage comprend un mouvement de translation le long d'un axe de rotation (8) et/ou un mouvement de translation transversalement à cet axe, autour duquel la partie supérieure (10) peut tourner lors du passage de la position initiale à une position abaissée, et/ou un mouvement d'au moins la première portion d'étanchéité (14) du moyen d'étanchéité (12), la portion d'étanchéité (14) étant adjacente à la partie supérieure (10) ou à l'embase (6) dans le système d'étanchéité et pouvant être disposée sans contact physique par rapport à la partie supérieure (10) ou à l'embase (6) dans la position de déblocage.

3. Dispositif d'étanchéité (2) selon la revendication 1 ou 2, **caractérisé en ce que**
le moyen d'espacement (24) comprend au moins une saillie qui s'étend parallèlement à l'axe de rotation (8) de la partie supérieure (10) en direction de l'embase (6) ou inversement, ladite saillie comprenant au moins une portion de déplacement (26) oblique par rapport à l'axe de rotation (8), la portion de déplacement (26) pouvant être déplacée lors du passage de la partie supérieure (10) d'une position initiale à une position abaissée, tout du moins temporairement, par rapport une partie coulissante (22) du moyen d'étanchéité (12), la partie coulissante (22) étant conçue de manière à être au moins partiellement complémentaire à la portion de déplacement (26).

4. Dispositif d'étanchéité (2) selon la revendication 3, **caractérisé en ce que** la partie coulissante (22) présente un profil de forme ondulée ou en dents de scie.

5. Dispositif d'étanchéité (2) selon au moins l'une des revendications précédentes, **caractérisé par**
au moins un élément de serrage (20), à travers lequel au moins un moyen d'étanchéité (12) est précontraint ou peut être précontraint dans le système d'étanchéité.

6. Dispositif d'étanchéité (2) selon la revendication 5, **caractérisé en ce que** le moyen d'étanchéité (12) comprend au moins une deuxième portion d'étanchéité (18) disposée contre l'embase (6) ou la partie supérieure (10), tout du moins dans le système d'étanchéité, la deuxième portion d'étanchéité (18) étant supportée par l'embase (6) en direction de l'axe de rotation (8) et/ou comprenant l'élément de serrage (20).

7. Dispositif d'étanchéité (2) selon au moins l'une des revendications 5 et 6, **caractérisé en ce que**
l'élément de serrage (20) comprend au moins un moyen de ressort, en particulier un anneau-ressort.

8. Dispositif d'étanchéité (2) selon au moins l'une des revendications précédentes, **caractérisé en ce que**
le moyen d'étanchéité (12) s'étend autour de l'axe de rotation (8) comme un anneau, en particulier de manière à l'entourer au moins presque totalement.

9. Dispositif d'étanchéité (2) selon au moins l'une des revendications précédentes, **caractérisé en ce que**
la première portion d'étanchéité (14), la deuxième portion d'étanchéité (18) et la partie coulissante (22) comprend un composant commun, dans lequel la partie coulissante (22) est disposée par rapport à la deuxième portion d'étanchéité (18) en direction de l'axe de rotation (8) et s'étend transversalement par rapport à l'axe de rotation (8) et/ou dans lequel la première portion d'étanchéité (14) et la deuxième portion d'étanchéité (18) sont disposées parallèlement s'étendant à l'axe de rotation (8).

10. Dispositif d'étanchéité (2) selon au moins l'une des revendications précédentes, **caractérisé en ce que**
la première portion d'étanchéité (14) considérée transversalement à l'axe de rotation (8) comprend une épaisseur située et formée de manière à correspondre, plus particulièrement à être complémentaire, à un logement (16) en forme de rainure dans la partie supérieure (10) ou l'embase (6).

11. Dispositif de rétroviseur (24), comme un rétroviseur intérieur ou un rétroviseur extérieur ou une caméra, d'un véhicule automobile, avec au moins une embase (6) et au moins une partie supérieure (10), la partie supérieure (10) pouvant tourner par rapport à l'embase (6) à partir d'une position initiale dans au moins une position abaissée, et avec au moins un dispositif d'étanchéité (2) selon l'une des revendications 1 à 10, qui peut être placé entre la partie supérieure (10) et l'embase (6), le dispositif d'étanchéité (2) comprenant au moins un moyen d'étanchéité (12), qui est fixable ou fixé soit sur l'embase (6) soit sur la partie supérieure (10) et qui est disposable ou disposé dans un système d'étanchéité, au sein duquel il est placé contre l'embase (6) ou la partie supérieure (10) et ferme un espace vide situé entre l'embase (6) et la partie supérieure (10), **caractérisé en ce que** le dispositif d'étanchéité (2) comprend au moins un moyen d'espacement (24), à travers lequel le moyen d'étanchéité (12), tout du moins lors du passage de la partie supérieure (10) d'une position initiale à une position abaissée, peut être amené, tout du moins temporairement, à partir du système d'étanchéité à une position de déblocage, dans laquelle le moyen d'étanchéité (12) peut être disposé sans contact physique par rapport à la partie supérieure (10) et/ou l'embase (6).

12. Dispositif de rétroviseur (4) selon la revendication 11, **caractérisé par** au moins un logement (16) en forme de rainure pour une première portion d'étanchéité (14) du moyen d'étanchéité (12) dans la partie supérieure (10) et/ou dans l'embase (6), dans lequel le logement (16) en forme de rainure est formé de manière à correspondre, plus particulièrement à être complémentaire, à la première portion d'étanchéité (14).

13. Dispositif de rétroviseur (4) selon l'une des revendications 11 ou 12, **caractérisé en ce que**
le moyen d'espacement (24) présente un composant commun avec une portion d'ouverture de la partie supérieure (10) ou de l'embase (6) ou **en ce que** le moyen d'espacement (24) est fixé, plus particulièrement moulé par injection, sur une portion d'ouverture de la partie supérieure (10) ou de l'embase (6).

14. Dispositif de rétroviseur (4) selon l'une des revendications 11 à 13, **caractérisé en ce qu'**un
espacement entre l'embase (6) et la partie supérieure (10) est sensiblement le même en position initiale, en position abaissée ainsi que lors du passage de la position initiale à la position abaissée.

15. Véhicule automobile avec au moins un dispositif de rétroviseur (4) selon l'une des revendications 11 à 14 et avec au moins un dispositif d'étanchéité (2) selon l'une des revendications 1 à 10.
